# EUROPÄISCHE PATENTANMELDUNG

(11) **EP 2 388 378 A2**
(43) Veröffentlichungstag der Anmeldung: **23.11.2011**
(21) Anmeldenummer: 11165540.3
(22) Anmeldetag: 10.05.2011
(51) Int. Cl.: E03C 1/04

(54) **Wasserleitungsarmatur mit einem für Hochdruckeinsatz und Niederdruckeinsatz austauschbar eingerichteten Einsatz**

(30) Priorität: 22.05.2010 DE 102010021323; 11.03.2011 DE 102011013709
(71) Anmelder: Ideal Standard International BVBA, 1160 Brussels (BE)
(72) Erfinder: Bonchev, Rumen, 5400, Sevlievo (BG); Kanchev, Emilian, 5300, Gabrovo (BG); Behr, Josef, 54516, Wittlich (DE)
(74) Vertreter: Müller, Karl-Ernst

(57) **Zusammenfassung**

Eine Wasserleitungsarmatur mit aus einer eine lageveränderliche Steuerscheibe sowie drei Öffnungen zur Wasserführung aufweisenden Kartusche und einem daran angeschlossenen, eine Mischwasserauslassöffnung aufweisenden Einsatzstück bestehenden Anordnung zur Zuleitung und Verteilung von Kaltwasser, Warmwasser und Mischwasser, ist dadurch gekennzeichnet, dass das Einsatzstück (10) aus einer an die Kartusche angrenzenden oberen Scheibe (15) und einem die Mischwasserauslassöffnung (25) aufweisenden wasserführenden und mit der oberen Scheibe (15) lösbar verbundenen Zwischenstück (19) besteht, wobei das aufgrund der lösbaren Anordnung auswechselbar angeordnete Zwischenstück (19) eine an einen Hochdruckeinsatz oder einen Niederdruckeinsatz angepasste Ausgestaltung seiner internen Wasserwege aufweist und die obere Scheibe (15) ein für Hochdruckeinsatz und Niederdruckeinsatz verwendbares Lochbild mit drei Öffnungen (12, 13, 14; 16, 17, 18) aufweist und wobei von den Öffnungen (12, 13, 14) einer am Zwischen stück (19) angeordneten unteren Scheibe (11) eine erste Öffnung (12) dem Anschluss der Kaltwasserzufuhr in das Zwischenstück (19) und eine zweite Öffnung (13) zum Anschluss der Warmwasserzufuhr in das Zwischenstück (18) eingerichtet ist und wobei eine dritte Öffnung (14) in der unteren Scheibe (11) bei Niederdruckeinsatz zum Anschluss einer vom Zwischenstück (19) zum die Warmwasserzufuhr ausführenden Warmwasserspeicher herangezogen ist.

## Beschreibung

Die Erfindung betrifft eine Wasserleitungsarmatur mit aus einer eine lageveränderliche Steuerscheibe sowie drei Öffnungen zur Wasserführung aufweisenden Kartusche und einem daran angeschlossenen, eine Mischwasserauslassöffnung aufweisenden Einsatzstück bestehenden Anordnung zur Zuleitung und Verteilung von Kaltwasser, Warmwasser und Mischwasser.

Eine Wasserleitungsarmatur mit entsprechendem Aufbau ist beispielsweise in der EP 1 852 558 A1 beschrieben. Das Einsatzstück ist bei der bekannten Armatur als Innengehäuse ausgebildet, in dessen oberen Teil die Kartusche eingesetzt ist. Das Innengehäuse weist einen Boden auf, in welchem zwei Öffnungen zum Anschluss einer Kaltwasserleitung und einer Warmwasserleitung ausgebildet sind. Die auf dem Boden des Einsatzstücks aufgesetzte Kartusche weist an ihrer dem Einsatzstück zugewandten Fläche drei Öffnungen auf, nämlich eine Eintrittsöffnung für das Kaltwasser, eine Eintrittsöffnung für das zugeführte Warmwasser und eine dritte Öffnung, über welche das in der Kartusche durch Veränderung der Lage ihrer beweglichen Steuerscheibe erzeugte Mischwasser aus der Kartusche austritt. Eine derartige Wasserleitungsarmatur ist somit für einen sogenannten Hochdruckeinsatz eingerichtet, bei welchem Kaltwasser und Warmwasser mit jeweils einem im Wesentlichen gleichen Druck der Armatur zugeleitet werden.

Insbesondere bei Küchenarmaturen ist eine andere Einsatzart bekannt, bei welcher das warme Wasser in einem drucklosen Warmwasserspeicher bevorratet ist und von dem in den Warmwasserspeicher eingeleiteten Kaltwasser verdrängt und dadurch zur Armatur geleitet wird. Eine solche Anordnung ist beispielsweise in der DE 43 96 070 C1 beschrieben. Hierbei arbeitet die Kartusche als Kaltwasserkartusche, die eine entsprechende Verteilung eines über eine Kaltwasserzufuhr zugeführten Kaltwassers einerseits in eine zum Warmwasserspeicher führende Kaltwasserleitung und andererseits in einen zu einer Mischwasserauslassöffnung führenden Kaltwasserstrom übernimmt. Das von der Kartusche zum Warmwasserspeicher fließende Kaltwasser bewirkt in dem Warmwasserspeicher eine entsprechende Abgabe von Warmwasser, welches über eine gesonderte Warmwasserleitung ebenfalls der Mischwasserauslassöffnung der Wasserleitungsarmatur zugeführt wird und sich hier mit dem von der Kartusche freigegebenen Kaltwasseranteil vermischt.

Der Erfindung liegt die Aufgabe zugrunde, eine Wasserleitungsarmatur der eingangs genannten Art so auszubilden, dass deren Verwendung im Hochdruckeinsatz wie auch im Niederdruckeinsatz mit einem geringen Anpassungsaufwand durchzuführen ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht hierzu eine Wasserleitungsarmatur, insbesondere in der Form einer Küchenarmatur vor, bei welcher das Einsatzstück aus einer an die Kartusche angrenzenden oberen Scheibe, und einem die Mischwasserauslassöffnung aufweisenden wasserführenden und mit der oberen Scheibe lösbar verbundenen Zwischenstück besteht, wobei das aufgrund der lösbaren Anordnung auswechselbar angeordnete Zwischenstück eine an einen Hochdruckeinsatz oder einen Niederdruckeinsatz angepasste Ausgestaltung seiner internen Wasserwege aufweist und die obere Scheibe ein für Hochdruckeinsatz und Niederdruckeinsatz verwendbares Lochbild mit drei Öffnungen aufweist und wobei von den Öffnungen einer am Zwischenstück angeordneten unteren Scheibe eine erste Öffnung dem Anschluss der Kaltwasserzufuhr in das Zwischenstück und eine zweite Öffnung zum Anschluss der Warmwasserzufuhr in das Zwischenstück eingerichtet ist und wobei eine dritte Öffnung in der unteren Scheibe bei Niederdruckeinsatz zum Anschluss einer vom Zwischenstück zum die Warmwasserzufuhr ausführenden Warmwasserspeicher herangezogen ist.

Mit der Erfindung ist somit der Vorteil verbunden, dass für Hochdruckeinsatz wie auch für Niederdruckeinsatz die obere Scheibe jeweils unverändert bleibt, so dass die Fertigung von unterschiedlichen Einzelteilen reduziert ist. Lediglich das Zwischenstück bedarf hinsichtlich der Ausgestaltung seiner internen Wasserwege einer Anpassung an den Hochdruckeinsatz bzw. den Niederdruckeinsatz.

So ist nach einem ersten Ausführungsbeispiel für einen Hochdruckeinsatz des Zwischenstücks vorgesehen, dass das Zwischenstück einen die erste an die Kaltwasserzufuhr angeschlossene Öffnung in der unteren Scheibe mit einer ersten mit einer zugeordneten ersten Öffnung in der Kartusche korrespondierenden Ausgangsöffnung in der oberen Scheibe verbindenden Wasserweg, einen weiteren die zweite an die Warmwasserzufuhr angeschlossene Öffnung in der unteren Scheibe mit einer zweiten mit einer zugeordneten zweiten Öffnung in der Kartusche korrespondierenden Ausgangsöffnung in der oberen Scheibe verbindenden Wasserweg und eine der nicht genutzten dritten Öffnung in der unteren Scheibe zugeordnete Leerkammer aufweist, wobei die dritte Öffnung der Kartusche mit der im Zwischenstück ausgebildeten Mischwasserauslassöffnung verbunden ist.

Im Hinblick auf einen Niederdruckeinsatz ist eine Ausgestaltung des Zwischenstücks vorgesehen, bei der das Zwischenstück einen die erste an die Kaltwasserzufuhr angeschlossene Öffnung in der unteren Scheibe mit einer ersten mit einer zugeordneten ersten Öffnung in der Kartusche korrespondierenden Ausgangsöffnung in der oberen Scheibe verbindenden Wasserweg, einen die zweite an die vom Warmwasserspeicher herkommende Warmwasserzufuhr angeschlossene Öffnung in der unteren Scheibe mit der im Zwischenstück ausgebildeten Mischwasserauslassöffnung verbindenden Wasserweg, einen die an eine zum Warmwasserspeicher führende Kaltwasserleitung angeschlossene dritte Öffnung in der unteren Scheibe mit einer zugeordneten zweiten Öffnung in der Kartusche verbindenden Wasserweg sowie einen eine zugeordnete dritte Öffnung der Kartusche mit der Mischwasserauslassöffnung des Zwischenstücks verbindenden Wasserweg aufweist.

Gemäß einer ersten Ausführungsform der Erfindung ist vorgesehen, dass die untere Scheibe einstückiger Bestandteil des Zwischenstücks ist. In diesem Fall wird das Zwischenstück gemeinsam mit der einstückig daran angeformten unteren Scheibe ausgewechselt, womit der Vorteil verbunden ist, dass insgesamt ein Bauteil weniger hergestellt bzw. bei der Montage gehandhabt werden muss.

In einer alternativen Ausführungsform der Erfindung ist vorgesehen, dass die untere Scheibe ein von dem Zwischenstück getrenntes Bauteil darstellt und das Zwischenstück zwischen der oberen Scheibe und der unteren Schreibe auswechselbar angeordnet ist, wobei die untere Scheibe ein mit der oberen Scheibe identisches Lochbild aufweist und die dritte Öffnung bei Hochdruckeinsatz unbenutzt ist Hiermit ist der Vorteil verbunden, dass obere und untere Scheibe jeweils unverändert bleiben, so dass ausschließlich das an Hochdruckeinsatz bzw. Niederdruckeinsatz angepasste Zwischenstück auszutauschen ist.

Bei diesem Ausführungsbeispiel ist zur Erleichterung der Montage der sanitären Wasserleitungsarmatur vorgesehen, dass obere Scheibe und untere Scheibe mit dem dazwischen auswechselbar angeordneten Zwischenstück mittels in über den Umfang der Scheiben verteilt angeordneten Bohrungen eingesetzter Befestigungsmittel zu einer Baueinheit verbunden sind, so dass die so hergestellte Baueinheit mit der Kartusche derart zusammengesetzt werden kann, dass die drei in der oberen Scheibe ausgebildeten Öffnungen mit den in der zugeordneten Unterfläche der Kartusche ausgebildeten drei Öffnungen fluchten und in dichtender Weise zusammenfügbar sind.

Hierzu kann nach einem Ausführungsbeispiel der Erfindung vorgesehen sein, dass über den Umfang von oberer und unterer Scheibe verteilt jeweils drei Bohrungen zur Aufnahme von Befestigungsmitteln angeordnet sind.

Soweit in den Scheiben jeweils drei funktionsbedingte Öffnungen vorgesehen sind und ferner drei Bohrungen zur Aufnahme von Befestigungsmitteln, können sich Probleme bei der Anordnung eines der Befestigung der Armatur dienenden zusätzlichen Stehbolzens ergeben, der in der Regel ebenfalls sein Widerlager in dem Einsatzstück findet. Zur Reduzierung des erforderlichen Platzbedarfs ist daher nach einem Ausführungsbeispiel der Erfindung vorgesehen, dass eines der Befestigungsmittel als in die untere Scheibe reichender Stehbolzen mit einem davon ausgehenden, in die in der oberen Scheibe ausgebildete zugeordnete Bohrung einschraubbaren Gewindebolzen ausgebildet ist, so dass dem Stehbolzen eine Doppelfunktion zukommt.

In zweckmäßiger Weise kann vorgesehen sein, dass die obere Scheibe und die untere Scheibe jeweils als Metallscheiben ausgebildet sind, so dass eine maßgenaue Fertigung der jeweils benötigten Scheiben gegeben ist.

In an sich bekannter Weise kann vorgesehen sein, dass das Zwischenstück aus Kunststoff besteht und daher hinsichtlich seiner in den unterschiedlichen Auslegungen für Hochdruckeinsatz und für Niederdruckeinsatz einzubringenden Wasserwege auch einfach herstellbar ist.

In der Zeichnung ist ein Ausführungsbeispiel der Erfindung wiedergegeben, welches nachstehend beschrieben ist. Es zeigen:
- Fig. 1: ein mit einer nicht dargestellten Kartusche einer Wasserleitungsarmatur zusammenzufügendes Einsatzstück in einer Perspektivdarstellung seiner Einzelteile mit einem für Hochdruckeinsatz ausgelegten Zwischenstück,
- Fig. 1a: das anstelle des Zwischenstücks gemäß Figur 1 in das Einsatzstück einzusetzende, für Niederdruckeinsatz ausgelegte Zwischenstück mit zugehörigen Einbauteilen,
- Fig. 2: das für Hochdruckeinsatz ausgelegte Einsatzstück gemäß Figur 1 in zusammengebautem Zustand,
- Fig. 3: den Gegenstand der Figur 2 in einer Draufsicht,
- Fig. 4: den Gegenstand der Figur 2 in einer teilweise geschnittenen Teilansicht,
- Fig. 5: das für Niederdruckeinsatz ausgelegte Einsatzstück gemäß Figur 1a in zusammengebautem Zustand,
- Fig. 6: den Gegenstand der Figur 5 in einer Draufsicht,
- Fig. 7: den Gegenstand der Figur 5 in einer teilweise geschnittenen Teilansicht.

Die Erfindung wird nachstehend anhand des Ausführungsbeispiels mit einem aus drei Teilen, nämlich oberer Scheibe, unterer Scheibe und dazwischen liegendem Zwischenstück bestehenden Einsatzstück erläutert. Die alternative Ausführungsform mit einer an dem Zwischenstück angeformten unteren Scheibe ist im Einzelnen nicht in der Zeichnung wiedergegeben, jedoch ist leicht einsehbar, dass sich eine grundsätzliche Änderung des Aufbaus der erfindungsgemäßen Wasserleitungsarmatur bzw. von deren Einsatzstück und dessen Funktion nicht ergibt.

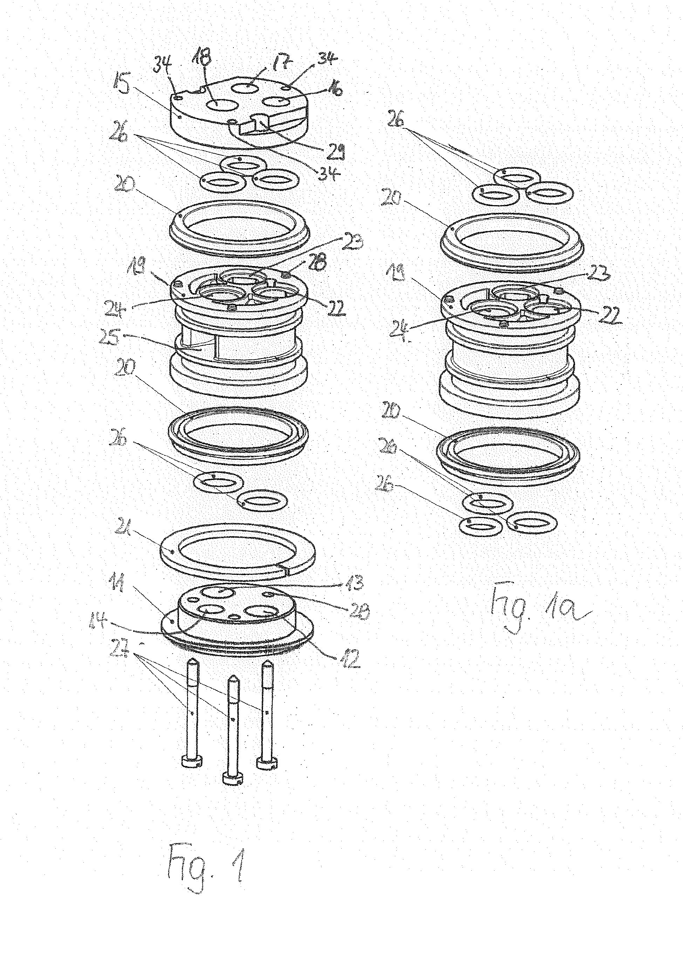

Das in Figur 1 dargestellte Einsatzstück besteht aus einer unteren Scheibe 11, wobei in der unteren Scheibe eine erste Öffnung 12, eine zweite Öffnung 13 und eine dritte Öffnung 14 ausgebildet sind, die der Wasserführung dienen. Entsprechend ist eine obere Scheibe 15 mit einer ersten Öffnung 16, einer zweiten Öffnung 17 und einer dritten Öffnung 18 vorgesehen, wobei an diese obere Scheibe 15 eine nicht weiter dargestellte Kartusche anschließbar ist, die ebenfalls in an sich bekannter Weise drei Öffnungen zur Wasserführung aufweist, die mit den drei Öffnungen 16, 17, 18 der oberen Scheibe 15 korrespondieren_{.}

Die obere Scheibe 15 und die untere Scheibe 11 schließen ein ebenfalls waserführendes Zwischenstück 19 zwischen sich ein, welches über zwischengesetzte Dichtungsringe 20 jeweils mit der oberen Scheibe 15 und der unteren Scheibe 11 zu verbinden ist. Zwischen der unteren Scheibe 11 und dem zugeordneten Dichtungsring 20 ist noch ein Aufsatzring 21 angeordnet.

Wie sich aus einer Zusammenschau der Figuren 1 und 1a ergibt, ist das Zwischenstück 19 zwischen oberer Scheibe 15 und unterer Scheibe 11 auswechselbar angeordnet, wobei das in Figur 1 dargestellte Zwischenstück 19 für einen Hochdruckeinsatz vorgerichtet ist, während das in Figur 1a dargestellte Zwischenstück 19 für einen Niederdruckeinsatz ausgelegt ist. Entsprechend weist das für Hochdruckeinsatz gemäß Figur 1 ausgelegte Zwischenstück 19 einen ersten Wasserweg 22, einen zweiten Wasserweg 23 und einen dritten Wasserweg 24 auf, wobei der dritte Wasserweg 24 mit einer an dem Zwischenstück 19 ausgebildeten Mischwasserauslassöffnung 25 verbunden ist. Soweit sowohl bei Hochdruckeinsatz als auch bei Niederdruckeinsatz alle drei Wasserwege im Zwischenstück 19 über die obere Scheibe 15 und deren Öffnungen 16, 17, 18 mit der Kartusche zu verbinden sind, sind den Wasserwegen 22, 23, 24 im Zwischenstück 19 zugeordnete Einzeldichtungen 26 zwischen dem Zwischenstück 19 und der oberen Scheibe 15 angeordnet, so dass eine innere Abdichtung zwischen der oberen Scheibe 15 und dem Zwischenstück 19 realisiert ist.

Soweit, wie noch zu beschreiben sein wird, bei Hochdruckeinsatz gemäß Figur 1 nur zwei der in der unteren Scheibe 11 ausgebildeten drei Öffnungen, nämlich die erste Öffnung 12 und die zweite Öffnung 13, wasserführend mit dem Zwischenstück 19 zu verbinden sind, sind zwischen dem Zwischenstück 19 und der unteren Scheibe 11 auch nur zwei Einzeldichtungen 26 angeordnet.

Zur Verbindung der in Figur 1 dargestellten Einzelteile zu einer Baueinheit sind in der unteren Scheibe 11, dem Zwischenstück 19 wie auch in der oberen Scheibe 15 jeweils Bohrungen 28 ausgebildet, in die Befestigungsschrauben 27 einschraubbar sind. In die obere Scheibe 15 sind drei weitere Befestigungsbohrungen 24 eingelassen, in die Befestigungsmittel zur Verbindung der nicht dargestellten Kartusche mit dem als Baueinheit zusammengefügten Einsatzstück 10 einbringbar sind, ferner zwei Positionierungsbohrungen 29 zur richtigen Positionierung der Kartusche an dem Einsatzstück 10.

Soweit in Figur 1a ein für Niederdruckeinsatz vorgerichtetes Zwischenstück 19 dargestellt ist, ist bei diesem Zwischenstück die Mischwasserauslassöffnung nicht zu sehen; da bei dieser Ausführungsform alle drei Wasserwege 22, 23, 24 des Zwischenstücks 19 für eine Wasserführung herangezogen sind, sind bei dieser Vorrichtung des Zwischenstücks 19 entsprechend drei Einzeldichtungen 26 zur Abdichtung der Wasserwege 22, 23, 24 des Zwischenstücks 19 gegen die zugeordneten Öffnungen 12, 13, 14 in der unteren Scheibe 11 angeordnet.

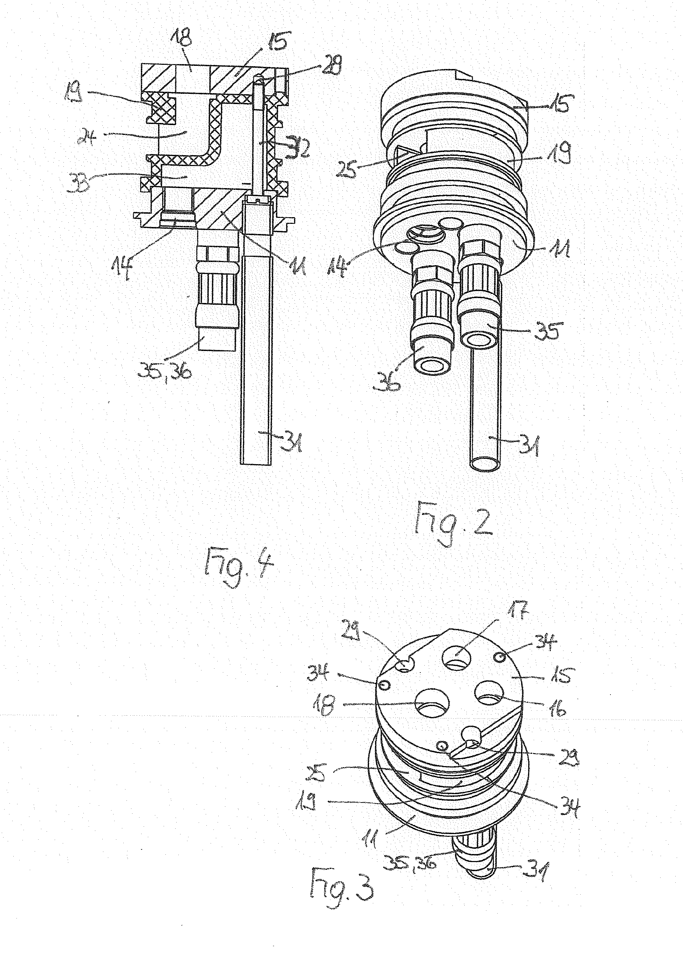

Aus den Figuren 2 bis 4 lässt sich das für Hochdruckeinsatz entsprechend Figur 1 vorgerichtete Einsatzstück 10 nochmals entnehmen. Hierbei ist an die erste Öffnung 12 in der unteren Scheibe 11 eine Kaltwasserleitung 35 angeschlossen, über die Kaltwasser in den zugeordneten ersten Wasserweg 22 des Zwischenstücks 19 zur ersten Öffnung 16 in der oberen Scheibe 15 durch das Zwischenstück 19 hindurchgeleitet wird, wobei der ersten Öffnung 16 in der oberen Scheibe 15 eine erste Öffnung als Kaltwassereintritt in der nicht dargestellten Kartusche zugeordnet beziehungsweise daran angeschlossene ist. Weiterhin ist an die zweite Öffnung 13 in der unteren Scheibe 11 eine Warmwasserleitung 36 angeschlossen, über welche Warmwasser in den zweiten Wasserwege 23 des Zwischenstücks 19 eingeleitet und entsprechend über die zweite Öffnung 17 in der oberen Scheibe 15 in eine zugeordnete zweite Öffnung als Warmwassereinlass in die Kartusche eingeleitet wird. Die dritte Öffnung 14 in der unteren Scheibe 11 wird bei für Hochdruckeinsatz ausgelegtem Zwischenstück 19 nicht genutzt, so dass dieser dritten Öffnung 14 in dem Zwischenstück 19 eine Leerkammer 33 zugeordnet ist (Figur 4). Die dritte Öffnung 18 in der oberen Scheibe 15, die mit der zugeordneten dritten Öffnung als Mischwasserauslass in der Kartusche korrespondiert, ist über den in dem Einsatzstück 10 ausgebildeten dritten Wasserweg 24 mit der Mischwasserauslassöffnurlg 25 verbunden. Insofern wird der Mischkartusche über das Einsatzstück 10 Kaltwasser und Warmwasser zugeleitet, welches in der Mischkartusche durch Veränderung der Lage der Steuerscheibe gemischt wird und als Mischwasser über die Mischwasserauslassöffnung 25 einem nicht dargestellten Wasserauslass der Wasserleitungsarmatur zugeleitet wird.

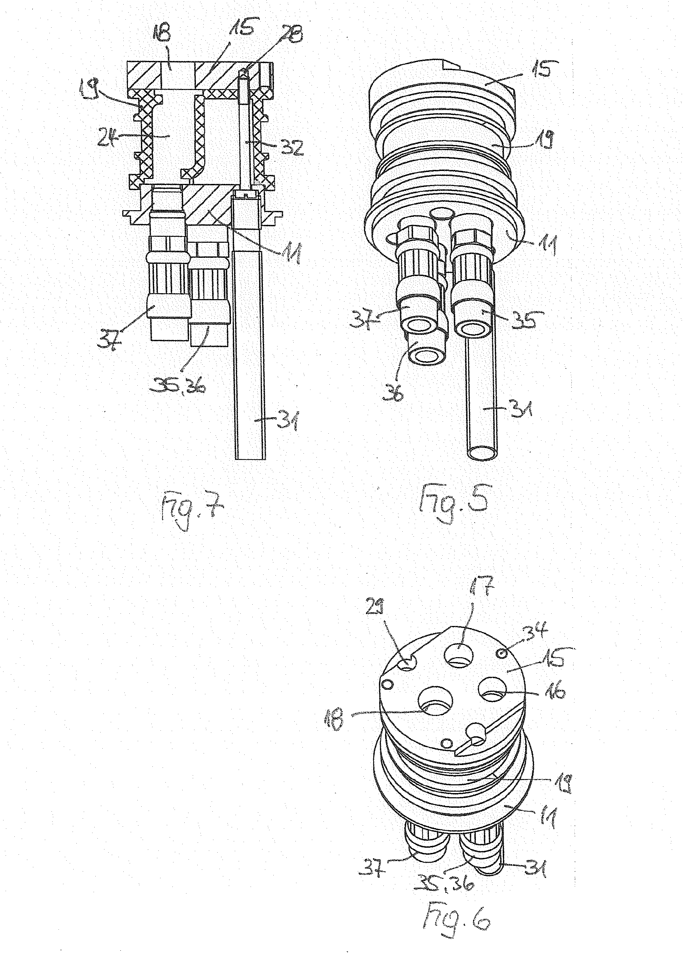

Wie sich aus Figuren 5 bis 7 in Verbindung mit Figur 1a entnehmen lässt, werden bei dem für Niederdruckeinsatz vorgerichteten Zwischenstück 19 alle drei Öffnungen 12, 13, 14 in der unteren Scheibe 11 für eine Wasserführung benutzt, wobei die in dem Zwischenstück 19 angeordneten Wasserwege verändert sind. An die erste Öffnung 12 in der unteren Scheibe 11 ist wiederum eine Kaltwasserleitung 35 angeschlossen, so dass über den ersten Wasserweg 22 und die erste Öffnung 16 in der oberen Scheibe 15 der Kaltwasserstrom in die nun als Kaltwasser-Kartusche arbeitende Kartusche eingeleitet werden kann. In der Kartusche erfolgt eine Aufteilung des Kaltwasserstroms in einen Kaltwasseranteil, der über das Einsatzstück 10 zu einem an das Einsatzstück 10 angeschlossenen Warmwasserspeicher zu leiten ist, um durch das in den Warmwasserspeicher eingeleitete Kaltwasser das Warmwasser aus dem Warmwasserspeicher zu verdrängen, sowie in einen der Mischwasserauslassöffnung des Zwischenstücks 19 zuzuleitenden Kaltwasseranteil. Hierfür wird die in der Kartusche vorgesehene dritte Öffnung, die mit der dritten Öffnung 18 in der oberen Scheibe 15 korrespondiert, sowie der an die dritte Öffnung 14 an der unteren Scheibe 11 angeschlossene dritte Wasserweg 24 im Zwischenstück 19 genutzt. Insoweit ist an die dritte Öffnung 14 in der unteren Scheibe 11 eine zum Warmwasserspeicher führende Kaltwasserleitung 37 angeschlossen. Die Verbindung des Warmwasserspeichers mit dem Einsatzstück 10 geschieht über eine an die zweite Öffnung 13 in der unteren Scheibe 11 angeschlossene Warmwasserleitung 36, wobei - wie aus der Zeichnung nicht weiter erkennbar - die zweite Öffnung 13 in der unteren Scheibe 11 über einen internen Wasserweg mit der Mischwasserauslassöffnung in dem Zwischenstück 19 verbunden ist. Die erforderliche Kaltwasserzuleitung zu der Mischwasserauslassöffnung geschieht über den in der Kartusche abgeteilten Kaltwasserstrom, der über die zugeordnete zweite Öffnung der Kartusche und die zweite Öffnung 17 in der oberen Scheibe 15 ebenfalls über den zugeordneten zweiten Wasserweg 23 in dem Zwischenstück, der in diesem Fall mit der Mischwasserauslassöffnung 25 verbunden ist, besagter Mischwasserauslassöffnung zugeführt wird.

Bei den in den Figuren 2 bis 4 einerseits und 5 bis 7 andererseits dargestellten Ausführungsbeispielen ist eines der drei in Figur 1 dargestellten Befestigungsmittel 27 als Stehbolzen 31 ausgebildet, der mit seinem vollem Querschnitt in die untere Scheibe 11 reicht und mit einem davon ausgehenden Gewindebolzen 32 in die entsprechend in der oberen Scheibe 15 ausgebildete Bohrung 28 einschraubbar ist. Insofern kommt dem Stehbolzen 32 eine Doppelfunktion zu, als der Stehbolzen 32 sowohl für die Befestigung von unterer Scheibe 11, oberer Scheibe 15 und Zwischenstück 19 sorgt, als auch gleichzeitig als Stehbolzen-Befestigung für die Montage der Wasserleitungsarmatur an einer zugeordneten Aufstandsfläche herangezogen werden kann.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Wasserleitungsarmatur mit aus einer eine lageveränderliche Steuerscheibe sowie drei Öffnungen zur Wasserführung aufweisenden Kartusche und einem daran angeschlossenen, eine Mischwasserauslassöffnung aufweisenden Einsatzstück bestehenden Anordnung zur Zuleitung und Verteilung von Kaltwasser, Warmwasser und Mischwasser, **dadurch gekennzeichnet, dass** das Einsatzstück (10) aus einer an die Kartusche angrenzenden oberen Scheibe (15) und einem die Mischwasserauslassöffnung (25) aufweisenden wasserführenden und mit der oberen Scheibe (15) lösbar verbundenen Zwischenstück (19) besteht, wobei das aufgrund der lösbaren Anordnung auswechselbar angeordnete Zwischenstück (19) eine an einen Hochdruckeinsatz oder einen Niederdruckeinsatz angepasste Ausgestaltung seiner internen Wasserwege aufweist und die obere Scheibe (15) ein für Hochdruckeinsatz und Niederdruckeinsatz verwendbares Lochbild mit drei Öffnungen (12, 13, 14; 16, 17, 18) aufweist und wobei von den Öffnungen (12, 13, 14) einer am Zwischenstück (19) angeordneten unteren Scheibe (11) eine erste Öffnung (12) dem Anschluss der Kaltwasserzufuhr in das Zwischenstück (19) und eine zweite Öffnung (13) zum Anschluss der Warmwasserzufuhr in das Zwischenstück (18) eingerichtet ist und wobei eine dritte Öffnung (14) in der unteren Scheibe (11) bei Niederdruckeinsatz zum Anschluss einer vom Zwischenstück (19) zum die Warmwasserzufuhr ausführenden Warmwasserspeicher herangezogen ist.

2. Wasserleitungsarmatur nach Anspruch 1, **dadurch gekennzeichnet, dass** das für Hochdruckeinsatz ausgelegte Zwischenstück (19) einen die erste an die Kaltwasserzufuhr (35) angeschlossene Öffnung (12) in der unteren Scheibe (11) mit einer ersten mit einer zugeordneten ersten Öffnung in der Kartusche korrespondierenden Ausgangsöffnung (16) in der oberen Scheibe (15) verbindenden Wasserweg (22), einen weiteren die zweite an die Warmwasserzufuhr (36) angeschlossene Öffnung (13) in der unteren Scheibe (11) mit einer zweiten mit einer zugeordneten zweiten Öffnung in der Kartusche korrespondierenden Ausgangsöffnung (17) in der oberen Scheibe (15) verbindenden Wasserweg (23) und eine der nicht genutzten dritten Öffnung (14) in der unteren Scheibe (11) zugeordnete Leerkammer (33) aufweist, wobei die dritte Öffnung der Kartusche mit der im Zwischenstück (19) ausgebildeten Mischwasserauslassöffnung (25) verbunden ist.

3. Wasserleitungsarmatur nach Anspruch 1, **dadurch gekennzeichnet, dass** das für Niederdruckeinsatz ausgelegte Zwischenstück (19) einen die erste an die Kaltwasserzufuhr (35) angeschlossene Öffnung (12) in der unteren Scheibe (11) mit einer ersten mit einer zugeordneten ersten Öffnung in der Kartusche korrespondierenden Ausgangsöffnung (16) in der oberen Scheibe (15) verbindenden Wasserweg (22), einen die zweite an die vom Warmwasserspeicher herkommende Warmwasserzufuhr (36) angeschlossene Öffnung (13) in der unteren Scheibe (11) mit der im Zwischenstück (19) ausgebildeten Mischwasserauslassöffnung verbindenden Wasserweg, einen die an eine zum Warmwasserspeicher führende Kaltwasserleitung (37) angeschlossene dritte Öffnung (14) in der unteren Scheibe mit einer zugeordneten zweiten Öffnung in der Kartusche verbindenden Wasserweg (24) sowie einen eine zugeordnete dritte Öffnung der Kartusche mit der Mischwasserauslassöffnung des Zwischenstücks (19) verbindenden Wasserweg aufweist.

4. Wasserleitungsarmatur nach einem der Ansprüche 1 bis 3, **dadurch gekennzeichnet, dass** die untere Scheibe (11) einstückiger Bestandteil des Zwischenstücks (19) ist.

5. Wasserleitungsarmatur nach einem der Ansprüche 1 bis 3, **dadurch gekennzeichnet, dass** die untere Scheibe (11) ein von dem Zwischenstück (19) getrenntes Bauteil darstellt und das Zwischenstück (19) zwischen der oberen Scheibe (15) und der unteren Schreibe (11) auswechselbar angeordnet ist, wobei die untere Scheibe (11) ein mit der oberen Scheibe (15) identisches Lochbild aufweist und die dritte Öffnung (14) bei Hochdruckeinsatz unbenutzt ist.

6. Wasserleitungsarmatur nach Anspruch 5, **dadurch gekennzeichnet, dass** obere Scheibe (15) und untere Scheibe (11) mit dem dazwischen auswechselbar angeordneten Zwischenstück (19) mittels in über den Umfang der Scheiben (11, 15) verteilt angeordneten Bohrungen (28) eingesetzter Befestigungsmittel (27) zu einer Baueinheit verbunden sind.

7. Wasserleitungsarmatur nach Anspruch 6, **dadurch gekennzeichnet, dass** über den Umfang von oberer (15) und unterer (11) Scheibe verteilt jeweils drei Bohrungen (28) zur Aufnahme von Befestigungsmitteln (27) angeordnet sind.

8. Wasserleitungsarmatur nach Anspruch 6 oder 7, **dadurch gekennzeichnet, dass** eines der Befestigungsmittel als in die untere Scheibe (11) reichender Stehbolzen (31) mit einem davon ausgehenden, in die in der oberen Scheibe (15) ausgebildete zugeordnete Bohrung (28) einschraubbaren Gewindebolzen (32) ausgebildet ist.

9. Wasserleitungsarmatur nach einem der Ansprüche 6 bis 8, **dadurch gekennzeichnet, dass** die obere Scheibe (15) und die untere Scheibe (11) jeweils als Metallscheiben ausgebildet sind.

10. Wasserleitungsarmatur nach einem der Ansprüche 1 bis 9, **dadurch gekennzeichnet, dass** das Zwischenstück (19) aus Kunststoff besteht.
